# EUROPÄISCHE PATENTSCHRIFT

(11) **EP 0 810 358 B1**
(45) Veröffentlichungstag und Bekanntmachung des Hinweises auf die Patenterteilung: **22.01.2003**
(21) Anmeldenummer: 97107764.9
(22) Anmeldetag: 13.05.1997
(51) Int. Cl.: F02C 9/18, F01D 17/00, F02C 1/05, C21B 7/00

(54) **Verfahren zum Regeln von Gasdrücken bei Einsatz von Gasentspannungsturbinen**
Method to control the gas pressure for gasexpansion turbines
Méthode de régulation de la pression de gaz pour des turbines à expansion de gaz

(30) Priorität: 31.05.1996 DE 19621824
(43) Veröffentlichungstag der Anmeldung: 03.12.1997
(73) Patentinhaber: MAN Turbomaschinen AG, 46145 Oberhausen (DE)
(72) Erfinder: Blotenberg, Wilfried, Dr.-Ing., 46535 Dinslaken (DE)
(74) Vertreter: Radünz, Ingo, Dipl.-Ing.

(56) Entgegenhaltungen:
- DE-A- 19 545 520
- US-A- 4 067 557
- US-A- 4 069 660
- US-A- 4 180 249
- US-A- 4 461 142

## Beschreibung

Die Erfindung betrifft ein Verfahren zum Regeln von Gasdrücken eines im Verbund mit einem Reaktor arbeitenden-Regenerators, bei Einsatz von mindestens einer Gasentspannungsturbine mit den Merkmalen des Oberbegriffes des Anspruches 1.

Die Energierückgewinnung aus Abgasen in der chemischen oder der petrochemischen Industrie erfreut sich zunehmender Beliebtheit. In Prozessen wie FCC (Fluid Catalytic Cracking), PTA (Terephthalsäureherstellung), bei der Salpetersäureherstellung und anderen Verfahren treten Prozeßgase aus einem chemischen Prozeß aus, deren Energiegehalt ausreicht, um zwischen 30 % und 100 % der Kompressionsarbeit (Antriebsleistung für die erforderlichen Kompressoren) für das chemische Verfahren aufzubringen.

Zur Rückgewinnung dieser Energie werden in der Regel Gasexpansionsturbinen bzw. Expander verwendet.

Diese Gasexpansionsturbinen werden vom Abgas durchströmt, bevor dieses in die Atmosphäre austritt. Häufig sind die Gasexpansionsturbinen zusammen mit Kompressoren für die Verdichtung der Prozeßgase auf einer einzigen Maschinenwelle angeordnet, so daß sie den Kompressor direkt antreiben können.

In anderen Anwendungsfällen, insbesondere dann, wenn eine bestehende Anlage um eine Energierückgewinnungseinrichtung erweitert werden soll, kommen auch Gasentspannungsturbinen zum Einsatz, die nur einen elektrischen Generator antreiben.

Typische Leistungsklassen für derartige Gasexpansionsturbinen sind 6 - 20 MW, diese Anlagen werden jedoch auch für Leistungen bis 60 MW und darüber gebaut.

Um den Prozeßdruck auch bei variablen Abgasmengen konstant zu halten, befinden sich Regelarmaturen am Eintritt der Gasentspannungsturbine. Bei kleiner werdenden Abgasmengen drosseln diese Regelarmaturen, bei größer werdenden Abgasmengen öffnen sie.

Im Fall von Überlast können parallel zur Gasentspannungsturbine angeordnete Bypassarmaturen einen Teil des Abgases an der Gasentspannungsturbine vorbei direkt zur Atmosphäre leiten. Diese Bypassarmaturen werden zusammen so groß ausgelegt, daß sie bei ausgeschaltetem Expander auch die gesamte Abgasmenge zur Atmosphäre leiten können.

Gasentspannungsturbinen bzw. Expander gehören zur Klasse der rotierenden Maschinen und benötigen ein Notabschaltsystem. Eine der schwerwiegenden Störfälle an einer Gasentspannungsturbine ist die Überdrehzahl.

Zur Verhinderung einer Überdrehzahl müssen die Eintrittsarmaturen der Gasentspannungsturbine innerhalb von 0,6 bis 2 Sekunden schließen. Dieser Überdrehzahlfall ist besonders bei den Maschinenkonstellationen besonders kritisch, bei denen eine Gasentspannungsturbine nur einen elektrischen Generator antreibt.

Sollte z. B. durch eine Störung im Elektroteil des Generators der Generator plötzlich vom Netz getrennt werden, steht die gesamte Leistung der Gasentspannungsturbine zur Beschleunigung des Maschinensatzes zur Verfügung.

Nur wenn der Gasdurchsatz nach 0,6 Sekunden völlig unterbrochen ist, kann sichergestellt werden, daß der Anstieg der Drehzahl auf Werte unter 10 % der Nenndrehzahl begrenzt bleibt.

Auch bei Gasentspannungsturbinen, die zusammen mit Kompressoren auf einer Welle montiert sind, kann der Überdrehzahlfall eintreten. Schnellschließende Eintrittsarmaturen sind auch hier erforderlich. Hier kann jedoch die Schließzeit auf bis zu 2 Sekunden verlängert werden.

Energierückgewinnungsanlagen sind so auszulegen, daß sie den chemischen Prozeß nicht beeinträchtigen. Dies gilt auch für eine Notabschaltung. Es sind Schutz- und Regeleinrichtungen vorzusehen, die bei einer Notabschaltung sicherstellen, daß der Prozeßdruck keinen unzulässigen Änderungen ausgesetzt ist.

Bei Gasentspannungsturbinen bedeutet dies, daß die Umgehungsarmaturen zur Gasentspannungsturbine (Bypassarmaturen) im Notabschaltfall derart schnell öffnen müssen, daß sie das gesamte Abgas durchsetzen.

Der sich über den Bypassarmaturen einstellende Differenzdruck muß genau so groß sein wie der Differenzdruck, der vor der Notabschaltung über der Expansionsturbine, unter zusätzlicher Berücksichtigung der Drosselwirkung der Eintrittsarmaturen, wirksam war.

Bekannt sind Druckregelungen von Gasexpansionsturbinen, die eine Regelung von Regeneratoraustrittsdrücken in FCC- (Fluid Catalytic Cracking)Anlagen beinhalten.

Bei dieser Druckregelung werden drei Armaturen im "Split-Range" verfahren. Mit steigendem Ausgangssignal des Prozeßdruckreglers wird zunächst eine Armatur am Eintritt der Entspannungsturbine geöffnet. Ist diese völlig geöffnet, beginnt eine kleine Bypassarmatur zu öffnen. Ist auch die kleine Armatur völlig geöffnet, öffnet eine große Armatur, so daß bei vollem Ausgangssignal des Prozeßdruckreglers alle drei Armaturen geöffnet sind.

Eine große (zweite) und eine kleine (erste) Bypassarmatur werden deshalb verwendet, weil mit einer kleinen Armatur die Volumenströme besser geregelt werden können als mit einer großen Armatur. Normalerweise wird nur eine kleine Teilmenge im Bypass gesteuert. Diese kleine Menge läßt sich mit einem kleinen Ventil besser regeln als mit einem großen.

Jede der drei Armaturen wird zusätzlich von Sicherheitssteuerungen angesteuert. Diese Sicherheitssteuerungen wirken unabhängig von der Regelung und fahren beim Ansprechen einer Steuerung die jeweilige Armatur in eine vorbestimmte sichere Endlage. Für die Eintrittsarmatur der Entspannungsturbine ist dies die geschlossene Stellung, für die erste oder zweite Bypassarmatur ist es die geöffnete Stellung.

Kommt es zu einem Lastabwurf des Generators oder einer anderen Laständerung schließt die Eintrittsarmatur der Entspannungsturbine, die von der Sicherheitssteuerung gesteuert wird. Als Folge steigt der Druck im Prozeß an. Dieses erkennt der Prozeßdruckregler und vergrößert sein Ausgangssignal. Über eine "Split-Range"-Steuerung öffnen zunächst die erste (kleine) Bypassarmatur und dann die zweite (große) Bypass-Armatur so weit, bis der Prozeßdruck seinen Sollwert wieder erreicht hat.

Dieses Regelverfahren hat jedoch den Nachteil, daß nicht unerhebliche Schwankungen des Prozeßdruckes eintreten. Insbesondere steigt der Druck unmittelbar nach dem Lastabwurf deutlich an, bevor der Prozeßdruckregler eingreifen und durch öffnen der Bypassarmaturen den Druckanstieg abfangen kann.

Aus der US-A-4 461 142 ist ein Verfahren zur Rückgewinnung der Energie von Hochofengas durch Gasentspannung in einer Entspannungsturbine bekannt, die einem Bypass angeordnet ist. Die Regelung erfolgt durch ein Durchflussverteilungungsventil, in dem das Gas zu einem anderen System mit ausreichender Energierückgewinnungs-Kapazität strömt. Die Regelparameter dieses Reglers können nur auf einen Parametersatz eingestellt werden, wobei dieser Parametersatz derart zu wählen ist, daß die Anlage im normalen Betrieb stabil arbeitet.

In der US-A-4 067 557 ist ein Verfahren zum Betrieb von mindestens zwei Gasentspannungsturbinen beschrieben. Die Aufgabe, beim Abschalten einer Gasentspannungsturbine den weiteren Betrieb der vorgeschalteten Anlage aufrechtzuerhalten, wird in diesem bekannten Verfahren dadurch gelöst, daß der Entspannungsprozess auf mehrere parallel installierte Gasentspannungsturbinen aufgeteilt wird. Dieses Verfahren hat den Nachteil, daß erheblich höhere Investitionskosten anfallen, da die Anzahl der installierten Gasentspannungsturbinen vervielfacht wird.

Aus der US-A-4 180 249 ist ein Verfahren zur Rückgewinnung von Energie mit einer Entspannungsturbine bekannt, bei dem der Austrittsdruck der vorgeschalteten Anlage entweder durch die Entspannungsturbine oder durch ein Bypassventil gehalten wird. Dabei ist die Umschaltung von einer Betriebsart in die andere möglich. Hierzu werden zwei unabhängigen Regler für Bypass und Entspannungsturbine mit gestaffelt eingestellten Sollwerten verwendet. Bei einer Abschaltung der Entspannungsturbine steigt der Austrittsdruck des vorgeschalteten Prozesses an und läßt den Bypassdruckregler automatisch übernehmen. Dieses Regelverfahren hat den Nachteil, daß bei einer plötzlichen Abschaltung der Entspannungsturbine erhebliche Schwankungen des Austrittsdrucks der vorgeschalteten Anlage zu verzeichnen sind. Dieses ergibt sich allein schon daraus, daß der Bypassregler nur auf eine Abweichung des Druckistwerts vom Solldruck reagieren kann.

Die Aufgabe der Erfindung besteht darin, die Regelung der Bypassarmaturen und der Eintrittsarmatur der Gasentspannungsturbine bei plötzlichem Lastabfall so zu stabilisieren, daß auch bei nichtlinearen Kennlinien der Regelarmaturen das Gesamtsystem linearisiert wird, indem ein linearer Zusammenhang zwischen dem Austritt des Druckreglers und dem Durchfluß durch die Gasentspannungsturbine bzw. die Bypassarmaturen hergestellt wird und daß die Schwankungen des Prozeßdrucks bei einer Störung minimiert werden.

Die Aufgabe wird bei einem gattungsgemäßen Verfahren erfindungsgemäß durch die kennzeichnenden Merkmale des Anspruches 1 gelöst. Die Unteransprüche stellen eine vorteilhafte Ausgestaltung der Erfindung dar.

Die Erfindung geht von der Überlegung aus, daß beim Einsetzen eines plötzlichen Lastabwurfes bereits bekannt ist, welche stationäre Endlage die Bypassarmaturen einnehmen müssen.

Dieses ist die Stellung, in der der Druckabfall über den Bypassarmaturen - sofern Drosselkammern hinter den Armaturen angeordnet sind, auch unter Berücksichtigung des Druckgefälles dieser Drosselkammern - nach dem Lastabwurf genau so groß ist wie das Druckgefälle über dem Expander und den Eintrittsarmaturen vor dem Lastabwurf. Auch der Druckverlust in den Rohrleitungen kann von Bedeutung sein und muß berücksichtigt werden.

Das Regelverhalten läßt sich erfindungsgemäß dadurch verbessern, daß der Stellgröße des Prozeßreglers im Augenblick des Lastabwurfs eine Störgröße aufaddiert wird. Dieser Stellgrößensprung bewirkt eine sprungförmige Veränderung der Stellungssollwerte für die Bypassarmaturen. Die Armaturen selbst fahren als Folge mit maximaler Stellgeschwindigkeiten in einen neuen Arbeitspunkt, aus dem sie anschließend durch den Prozeßdruckregler weiter verstellt werden. Die Höhe des Störgrößensprunges kann bei der Inbetriebnahme der Gesamtanlage ermittelt werden.

Durch die gesteuerte Verstellung der Bypassarmaturen läßt sich der unerwünschte Druckanstieg zwar deutlich reduzieren, nachteilig ist jedoch, daß sich die Sollstellung nur für einen einzigen Betriebspunkt der Anlage, d. h. für eine bestimmte Abgasmenge und einen bestimmten Prozeßdruck optimieren läßt. Wird die Anlage in einem anderen Betriebspunkt gefahren, treten mehr oder weniger große Druckschwankungen ein.

Erfindungsgemäß wird daher zusätzlich eine Kennlinienschar mit Stellungswerten für alle Armaturen als Funktion des Abgasdurchflusses aufgenommen, und zwar einmal mit der Gasexpansionsturbine in Betrieb (Regelung 1) und einmal ohne Betrieb der Gasexpansionsturbine (Regelung 2).

Diese Kennlinien werden in den Prozeßregler einprogrammiert. Das Ausgangssignal des Prozeßreglers (Stellgröße) wird über Funktionsgeber den Regelarmaturen aufgeschaltet. Aufgabe dieser Funktionsgeber ist es, den Kennlinienverlauf zu linealisieren. Ein stetig ansteigendes Reglerausgangssignal soll einen stetig steigenden Durchfluß zur Folge haben. Die Funktionsgeber sind derart programmiert, daß, immer dann, wenn eine Armatur eine Endlage erreicht hat, die nächste Armatur die Verstellung übernimmt. Da sich für beide Betriebsfälle "Gasexpansionsturbine in Betrieb" und "Gasexpansionsturbine außer Betrieb" unterschiedliche Kennlinienverläufe ergeben, sind auch unterschiedliche Funktionsgeber für beide Betriebsarten erforderlich.

In einer anderen Ausführungsform können jeder Armatur zwei Funktionsgeber zugeordnet werden, die zusätzlich die Funktion der Split-Range Signalaufteilung übernehmen. In einer weiteren Ausführungsform können die Funktionsgeber für eine Betriebsart (Betrieb mit Gasexpansionsturbinen) in einem gemeinsamen Funktionsgeber für alle drei Armaturen zusammengefaßt sein und für eine zweite Betriebsart in einem zweiten Funktionsgeber. Diesen Funktionsgebern sind dann allerdings Rechenschaltungen zur Split-Range-Aufteilung der Signale nachzuschalten.

Da die Eintrittsregelarmatur der Gasexpansionsturbine nur bei Betriebsart "Gasexpansionsturbine in Betrieb" (Regelung 1) benötigt wird, genügt hier ein einziger Funktionsgeber. Für diesen Betriebsfall steuert z. B. der Funktionsgeber die Eintrittsregelarmatur mit einer Stellgröße von 0 und 57,8 % zwischen der völlig geschlossenen und der völlig geöffneten Stellung. Der Funktionsgeber der ersten (kleinen) Bypassarmatur steuert diese mit einem Stellgrößenbereich von 57,8 - 60,4 % und der Funktionsgeber der zweiten (großen) Bypassarmatur steuert diese mit einem Stellgrößenbereich von 60,4 % - 100 %.

Für den Betriebsfall "Gasexpansionsturbine außer Betrieb" (Regelung 2) öffnet die erste (kleine) Bypassarmatur mit einer Stellgröße zwischen 0 und 4,6 % und die zweite (große) Bypassarmatur zwischen 4,6 und 69 %. Stellgrößen mit mehr als 69 % sind in dieser Betriebsart nicht fahrbar, da die zugehörigen großen Durchflüsse nur möglich sind, wenn zusätzlich die Eintrittsarmatur öffnet.

Die in den Funktionsgeber der Eintrittsregelklappe der Gasexpansionsturbine und in den Bypassarmaturen einprogrammierten Kennlinien sind im übrigen von den im System herrschenden Drücken bzw. Volumenstrom des Abgases abhängig.

Erfindungsgemäß befinden sich in den Rohrleitungen jeder Bypassarmatur jeweils ein Umschaltrelais, welches bei Einsetzen einer Laständerung unverzüglich von der einen Kennlinienschar auf die andere Kennlinienschar umschaltet. Dadurch erhält jede Bypassarmatur unmittelbar mit Einsetzen des Lastabwurfes die Stellgröße, die sie stationär einnehmen würde, wenn die Entspannungsturbine nicht in Betrieb gewesen wäre. Dieses geschieht unabhängig vom jeweiligen Abgasdurchfluß, so daß auch im Teillastbereich oder einem Überlastpunkt immer eine optimale Umschaltung gewährleistet ist.

Wenn die Gasexpansionsturbine nicht im Betrieb ist (Regelung 2), ist die Eintrittsregelarmatur über die Sicherheitssteuerung völlig geschlossen, und für die Bypassarmaturen ist der Funktionsgeber wirksam, der bei Nichteingriff der Gasexpansionsturbine, d. h. bei einem Lastabwurf des Generators, in Aktion tritt.

Die Wirkung des Prozeßdruckreglers wird durch Umschaltung von einer Kennlinie auf die andere in keiner Weise beeinträchtigt, da eine Änderung des Prozeßdruckes oder eine Änderung des Drucksollwertes vom Prozeßdruckregler unmittelbar in eine Änderung der Stellgröße umgewandelt wird und diese geänderte Stellgröße dann über den jeweiligen Funktionsgeber unmittelbar den Armaturen aufgeschaltet wird.

Es sei angemerkt, daß auch die "Split-Range"-Aufteilung durch diese Funktionsgeber erfolgt und keine zusätzlichen Einrichtungen für diese Signalaufteilung erforderlich sind.

Die Aufnahme der Kennlinienscharen kann entweder experimentell während der Inbetriebnahme der Anlage erfolgen, sie kann jedoch auch zuvor durch Computersimulation ermittelt werden.

Die Aufnahme dieser Kennlinienscharen erfolgt dadurch, daß der Durchfluß durch die Rohrleitungen durch den Expander bzw. durch die Bypassarmaturen kontinuierlich gesteigert wird. Die Bereiche der Prozentzahlen, die oben angegeben sind, entsprechen jeweils einem prozentualen Massenstrom. Der Massenstrom ist dann 100 %, wenn alle drei Armaturen geöffnet sind, der Expander in Betrieb ist und der Nennanlagendruck gehalten wird. Dieser Fall ist jedoch nur theoretisch durchführbar, da, wie vorher beschrieben, die volle Abgasmenge entweder über die Gasentspannungsturbine oder über die Bypassarmaturen geführt werden kann.

Der rechnerische Gesamtdurchfluß (100 %) entspricht also nahezu 200 % des tatsächlich möglichen Durchflusses. In einer Berechnung bzw. einer Computersimulation ist dieser Durchfluß jedoch durchaus fahrbar. Die Kennlinienschar wird nun derart aufgenommen, daß die Anlage stationär in verschiedene Arbeitspunkte gefahren und der zu jedem Arbeitspunkt gehörige Massenstrom in den Rohrleitungen sowie die Stellung der Armaturen registriert wird.

Auf den Ausgang des Prozeßreglers kann vorübergehend eine zusätzliche Korrekturgröße beim Lastabwurf aufgeschaltet werden.

Das erfindungsgemäße Verfahren führt auch bei beliebig feinen Stützstellen für die Aufnahme der Kennlinien noch nicht zu einem optimalen Ergebnis, da bei geschlossenen oder weitgehend geschlossenen Bypassarmaturen die Rohrleitungselemente zwischen den Bypassarmaturen und den ihnen nachgeschalteten Drosselstellen weitgehend drucklos sind, weil der Durchfluß durch die Armaturen sowie durh die Drosselstellen gering ist und dadurch nur ein kleines Druckgefälle sich über den Drosselstellen einstellt. Öffnen nun die Bypassarmaturen, stellt sich stationär aufgrund des größeren Durchflusses ein höherer Druckverlust über den Drosselstellen ein, was dazu führt, daß auch der Druck zwischen den Armaturen und den Drosselstellen stationär deutlich höher liegt als zuvor.

Da diese Rohrleitungsabschnitte aber ein Gasvolumen darstellen und zum Erhöhen des Druckes ein zusätzlicher Massenstrom erforderlich ist, muß vorübergehend ein größerer Massenstrom durch die Armaturen fließen als durch die Drosselstelle. Dieses wird gemäß Anspruch 1 nicht berücksichtigt. Das hat zur Folge, daß bei dem erfindungsgemäßen Verfahren der Prozeßdruck vorübergehend kurzzeitig unter den stationären Wert fällt, da ja transient ein größerer Durchfluß aus dem Prozeß entnommen wird als im stationären Zustand.

Dieser Nachteil kann dadurch umgangen werden, daß mit jedem Lastabwurf dem Reglerausgang eine zusätzliche Störgröße, allerdings mit negativem Vorzeichen, aufaddiert wird. Diese Störgröße bewirkt, daß die Bypassarmaturen zunächst nicht ganz bis zur stationären Stellung fahren, sondern zunächst vorübergehend noch etwas weiter angedrosselt verharren, um auch transient im Bypass das gleiche Druckgefälle zu erzeugen, wie es sich zuvor über der Gasentspannungsturbine eingestellt hatte. Die zusätzliche Korrekturgröße kann rechnerisch ermittelt werden. Eine andere Möglichkeit besteht darin, die Gesamtanlage in einem Computermodell dynamisch zu simulieren und die Differenz zwischem dem Durchfluß durch die Drosselstellen und dem Durchfluß durch die Armaturen während eines simulierten Lastabwurfes zu erfassen, zu notieren/zu speichern und dadurch festzuhalten.

Die Differenz dieser beiden Massenströme entspricht der erforderlichen Korrekturgröße.

Die Massenstromdifferenz kann z. B. über der Zeit im Abstand von jeweils 0,1 Sekunde aufgetragen sein und im Regler als Funktionsverlauf gespeichert sein. Sollten in der Anlage Durchflußmeßstellen an den entsprechenden Meßorten vorhanden sein, kann die Korrekturgröße auch meßtechnisch bei einem Lastabwurf ermittelt werden.

Bei einer plötzlichen Laständerung der Expansionsturbine, insbesondere bei einer Abschaltung, schließen die Eintrittsarmaturen. Die Bypassarmaturen öffnen erfindungsgemäß so weit, daß sie die gesamte Rauchgasmenge durchsetzen können.

Soll das System nun in den ursprünglichen Zustand zurückgesetzt werden, schalten die Umschaltrelais der Bypassarmaturen wieder auf die Funktionsgeber für Betrieb mit Gasexpander zurück. Aufgrund des einprogrammierten Funktionsverlaufs steuern die Funktionsgeber für Betrieb ohne Gasexpander aber größere Signale aus als die Funktionsgeber für Betrieb mit Gasexpander. Die Folge ist ein Sprung der Bypassarmaturen in Schließrichtung. Zur Vermeidung dieses Sprunges wird die Stellgröße des Prozeßreglers im Umschaltaugenblick gesteuert um genau einen solchen Betrag geändert, daß der Ausgang der Funktionsgeber für Betrieb mit Gasexpander nach dem Umschalten entspricht. Dadurch wird sichergestellt, daß die Stellung der Bypassarmaturen durch die Umschaltung nicht beeinflußt wird. Die Umschaltung erfolgt stoßfrei.

Nach dieser Umschaltung ist der Gasexpander bzw. die Gasexpansionsturbine wieder anfahrbereit. Es wird zunächst die Eintrittsregelarmatur durch einen gesteuerten Eingriff völlig geöffnet. Anschließend wird durch langsames Öffnen der Schnellschlußarmatur die Gasexpansionstubine angefahren. Unzulässige Drehzahländerungen werden durch Eingriff des Drehzahlreglers vermeiden. Die Öffnung der Schnellschlußarmatur beeinflußt den Prozeßgasdruck geringfügig, dieser Einfluß wird durch den Prozeßregler kompensiert, der die Bypassarmaturen um den erforderlichen Betrag schließt.

Der Anfahrvorgang ist beendet, wenn der Generator synchronisiert und die Eintritts- und Schneilschlußarmaturen völlig geöffnet sind.

Auch während des Anfahrvorgangs können größere Laständerungen oder sogar Abschaltungen der Gasexpansionsturbine erfolgen. Es ist wünschenswert, auch bei dieser Betriebsweise die Rückwirkungen auf den Prozeß zu minimieren.

Dieses kann dadurch erfolgen, daß die Eingangsgrößen zu den Funktionsgebern für Betrieb ohne Gasexpander in Abhängigkeit von der Stellung der Schnellschlußarmatur bzw. in Abhängigkeit von der Sollstellung dieser Armatur (Ausgang des Drehzahlreglers) abgeschwächt werden. Ist die Schnellschlußarmatur völlig geöffnet, werden die Eingangssignale nicht abgeschwächt, ist die Schnellschlußarmatur völlig geschlossen, werden die Eingangssignale derart abgeschwächt, daß die Umschaltrelais der ersten und zweiten Bypassarmatur vor und nach der Umschaltung ein gleiches Ausgangssignal aussteuern. Nimmt die Eintrittsarmatur eine Zwischenstellung ein, erfolgt eine teilweise Abschwächung.

In einer weiteren Ausgestaltung der Erfindung wird unmittelbar mit dem Lastabwurf (Regelung 2) nicht mehr der Prozeßdruck, sondern der Druck unmittelbar vor den Bypassarmaturen bzw. der Gasentspannungsturbine konstant geregelt, da der Ausgangspunkt der Störung die Expander-Eintrittsarmaturen sind. Die Prozeßstörung setzt sich somit von dieser Stelle aus zum Prozeß hin fort. Wird nun die Prozeßstörung eher erfaßt, noch bevor sie im Prozeß selbst merklich wirksam wird, kann das Regelverhalten deutlich verbessert werden. Dies erfolgt dadurch, daß dem Regler nicht mehr die Differenz zwischen Prozeßdrucksollwert und tatsächlichem Prozeßdruck aufgeschaltet wird, sondern die Differenz zwischen dem Druck im Verzweigungspunkt der Rohrleitungen und dem Sollwert für diesen Druck. Als Sollwert für diesen Druck wird der Druck gewählt, der unmittelbar vor Lastabwurf an dieser Druckentnahmestelle herrscht.

Die Rückschaltung auf die normale Prozeßdruckregelung kann nach verschiedenen Kriterien erfolgen die nachfolgend beschrieben sind.

Das Rückschalten von "Regelung des Druckes vor der Gasentspannungsturbine" auf Prozeßdruckregelung kann zeitabhängig derart erfolgen, daß nach einer voreingestellten Zeit ab Lastabwurf wieder auf Prozeßregelung umgeschaltet wird.

Das Rückschalten von "Regelung des Druckes im Eintritt der Gasentspannungsturbine" auf Prozeßregelung erfolgt abhängig von einer voreingestellten Zeit und zusätzlich davon, daß die aktuelle Stellgröße der im Eingriff befindlichen Bypassarmatur den Mittelwert der Stellgröße über einem vordefinierten zurückliegenden Zeitraum entspricht.

Die Schwankungen des Prozeßdruckes sind dann minimal, wenn die Regler, und zwar sowohl der Regler für den Eintrittsdruck in die Gasentspannungsturbine als auch der Regler für den Prozeßdruck, mit möglichst großer Verstärkung betrieben werden.

Dieses kann jedoch dazu führen, daß die Armaturen nicht sofort die stationäre Endlage einnehmen, sondern das ein "gedämpfter Einschwingvorgang" einsetzt.
Dieses bedeutet, daß die Stellgröße zunächst über den stationären Wert überschwingt, anschließend durch einen Reglereingriff unter den stationären Wert unterschwingt, um anschließend wieder über den stationären Wert anzusteigen usw.

Erfolgt die Umschaltung der Eintrittsdruckregelung der Expansionsturbinen auf Prozeßregelung nur zeitgesteuert, besteht die Gefahr, daß eine Umschaltung genau dann erfolgt, wenn die Stellgröße das obere oder untere Extrem erreicht hat oder in der Nähe dieses Extrems liegt. Dieses hat zur Folge, daß eine relativ große Abweichung nach dem Zurückschalten auf Prozeßdruckregelung durch den Prozeßdruckregler ausgeregelt werden muß. Dieses bedingt aber unnötig große Änderungen des Prozeßdruckes selbst, so daß sie nach Möglichkeit zu vermeiden sind. Eine Abhilfe schafft hier das zuvor beschriebene Verfahren, nämlich erst dann auf Prozeßdruckregelung zurückzuschalten, wenn die aktuelle Stellgröße genau den Mittelwert über einen zurückliegenden Zeitraum entspricht. Damit ist sichergestellt, daß die Stellung der Armaturen im Umschaltaugenblick sehr viel näher am neuen stationären Endwert liegen als sie sonst möglicherweise liegen.

Das gleiche Ziel wird auch erreicht, wenn die Umschaltung in dem Punkt erfolgt, in dem die Stellgröße der größten Änderung unterworfen ist.

Die Umschaltung von einem Regler auf den anderen kann auf verschiedene Arten erfolgen. Eine Möglichkeit besteht darin, zwei getrennte Regler, einen Differenzdruck- oder Prozeßregler und einen Druckregler vorzusehen. Jeder dieser beiden Regler steuert ein Ausgangssignal aus, wobei das Umschaltrelais der ersten Bypassarmatur nur eines dieser beiden Signale auf die nachfolgenden Funktionsgeber schaltet. Der Ausgang des anderen Reglers bleibt wirkungslos.

Bei einer solchen Anordnung besteht die Gefahr, daß der Ausgang des inaktiven Reglers ein anderes Signal annimmt als der aktive Regler. Bei einer Umschaltung würde ein Sprung entstehen. Um dies zu vermeiden, wird der inaktive Regler auf den Ausgang des aktiven Reglers nachgeführt, d. h. der Ausgang des inaktiven Reglers wird zwangsweise stets auf den Ausgangswert des aktiven Reglers gesetzt. Hierdurch werden Sprünge beim Umschalten vermieden.

Eine andere Möglichkeit zur Vermeidung von Sprüngen beim Umschalten besteht darin, nur einen einzigen gemeinsamen Regler zu verwenden. Es werden zwei Regeldifferenzen gebildet, zum einen die Differenz aus Differenzdrucksollwert und Differenzdruckistwert und zum anderen die Differenz aus Soll- und Istwert des Druckes vor den Bypassarmaturen. Beide Regeldifferenzen werden einem Relais aufgeschaltet, welches je nach gewünschter Betriebsart die eine oder die andere Regeldifferenz dem gemeinsamen Regler aufgeschaltet und die jeweils gewünschte Prozeßgröße konstant hält.

Die Änderungen des Prozeßdruckes beim Lastabwurf lassen sich weiterhin dadurch reduzieren, daß nach einem Lastabwurf die Proportionalverstärkung des aktiven Prozeßreglers erhöht wird. Dieses hat zur Folge, daß der Regelkreis zwar möglicherweise instabil wird und damit die oben beschriebenen Schwankungen der Stellgröße um den neuen stationären Punkt eintreten, andererseits hat dies jedoch den Vorteil, daß die Stellgrößen wesentlich schneller in die Nähe des neuen stationären Endwertes gelangen.

Eine Rückschaltung auf die normale Proportionälverstärkung kann in gleicher Weise erfolgen wie es oben beschrieben ist.

Eine variable Verstärkung kann sowohl für die Prozeßdruckregelung als auch für die Regelung des Eintrittsdruckes der Expansionsturbine gewählt werden.

Die oben beschriebenen Regelverfahren sind auch dann anwendbar, wenn zwischen zwei beliebigen Betriebszuständen von Regelung 1 auf Regelung 2 umgeschaltet wird. Der Fall "Gasexpansionsturbine außer Betrieb" ist somit nur ein Sonderfall.

Ein Ausführungsbeispiel der Erfindung wird anhand eines Regelschemas einer katalytischen Crackanlage mit einer im Abgasstrom angeordneten Gasexpansionsturbine mit Generator erläutert.

In einer katalytischen Crackanlage wird Katalysat kontinuierlich zwischen einem Reaktor (1) und einem Regenerator (2) umgewälzt. Im Regenerator (2) wird unter Zufuhr von Verbrennungsluft abgelagerter Kohlenstoff vom Katalysator abgebrannt. Reaktivierter Katalysator aus dem Regenerator (2) wird mit Beschickungsgut vermischt und zum Reaktor (1) zurückgeführt.

Das heiße Rauchgas in der Rauchgasleitung A (3) kann nach Verlassen des Regenerators (2) und Durchlauf durch einen Staubabscheider (31) in einem Doppelschieberventil (13) und einer Drosselkammer (14) entspannt und über einen Abhitzekessel (15) zum Hauptkamin geleitet werden. Diese Betriebsart ist nach dem Einbau einer Gasentspannungsturbine (7) auch weiterhin möglich. Das Doppelschieberventil (13) wird über einen Druckregler (32) gesteuert.

Nach dem Einbau der Gasentspannungsturbine (7) kann das heiße Rauchgas über die Rauchgasleitung B (4) statt durch das Doppelschieberventil (13) und die Drosselkammer (14) der Rauchgasleitung A (3) geleitet werden. Die dem Rauchgas entzogene Leistung wird in einem Generator (7.1) in elektrische Nutzleistung umgewandelt. Das Abgas der Gasentspannungsturbine (7) wird ebenfalls dem Abhitzekessel (15) zugeführt und durch den Hauptkamin in die Atmosphäre geleitet.

Im Normalbetrieb wird die Gasentspannungsturbine (7) vom Rauchgas durchströmt und elektrische Leistung erzeugt. Bei Lastabwurf werden Teile des Rauchgases durch Drosselarmaturen (11, 12) im Bypass über den Abwärmekessel (15) zum Kamin geleitet. Hierzu sind in der Rauchgasleitung B (4) vor der Gasentspannungsturbine (7) zwei Regel- (8) und Schnellschlußarmaturen (9) hintereinander sowie im Bypass C (5) eine erste Bypassarmatur (11) und eine zweite Bypassarmatur (12) angeordnet.

Durch die Zuschaltung einer Gasentspannungsturbine (7) ist auch eine Erweiterung des Regelsystems erforderlich, da der Hauptrauchgasstrom (ca. 95 %) durch die Gasentspannungsturbine (7) statt durch das Doppelschieberventil (13) geleitet wird. Beim Start oder Abschalten der Gasentspannungsturbine (7) soll der Differenzdruck zwischen Reaktor (1) und Regenerator (2) nicht unzulässig gestört werden.

Ferner sind zusätzlich zu den bereits genannten vier Regelarmaturen (8, 9, 11, 12) weitere Komponenten zum vorhandenen Regelsystem hinzugefügt:
- Ein Prozeßregler (17) und ein Druckregler (18), die in Split-range auf die Eintrittsregelklappe (8) und die beiden Bypassarmaturen (11) und (12) wirken.
- Einen Drehzahlregler (10) zur Synchronisierung des Expander/Generatorsystems (7, 7.1) mit dem elektrischen Netz. Der gleiche Regler (10) wird benutzt, um die Schnellschlußklappe (9) in die völlig geöffnete bzw. geschlossene Stellung zu fahren.

Alle Armaturen (8, 9, 11, 12) sind mit Positionsgebern (19, 20, 21, 22) zur exakten Positionierung sowie mit Stellantrieben (20.2, 21.2) zur Schnellöffnung der Bypassarmaturen (11) und (12) sowie mit Stellantrieben (19.2, 22.2) zum Schnellschluß der Eintrittsarmaturen (8) und (9) ausgerüstet.

Die Armatur (9) wird von Drehzahlregler (10) beaufschlagt und ist nur beim Anfahren der Expansionsturbine (7) bis zum Synchronisieren des Generators (7.1) im Eingriff. Danach wird die Armatur (9) in die ganz geöffnete Stellung gefahren.

Im Normalbetrieb bei Regelung 1 ist der Prozeßregler (17) im Eingriff. Die Regelarmatur (9) und die Eintrittsschnellschlußarmatur (8) sind vollständig geöffnet. Die zweite (große) Bypassarmatur (12) ist vollständig geschlossen und die erste (kleine) Bypassarmatur (11) regelt den Differenzdruck. Ca. 95 % der Rauchgasmenge durchströmen den Expander (7), der in seinem Nennbetriebspunkt arbeitet, und ca. 5 % die erste Bypassarmatur (11). Schwankungen im Rauchgas (nicht mehr als 3 % des Nenndurchflusses) werden vom Prozeßregler (17) erfaßt und durch Verstellen der ersten Bypassarmatur (11) geregelt. Die zweite Bypassarmatur (12) ist während des Normalbetriebs vollständig geschlossen, öffnet aber bei plötzlichem starken Rauchgasanfall zusätzlich. Ebenso schließen bei kleinem Rauchgasangebot die erste Bypassarmatur (11) und die Eintrittsregelarmatur (8) teilweise.

Die Leckgasmenge der ersten Bypassarmatur (11) reicht aus, um die Heißgasleitungen (5, 6) warmzuhalten. Erforderlichenfalls kann durch Einstellung der Minimalöffnung am Positionssregler (20.1 oder 21.1) eine Anpassung erfolgen.

Die in den Funktionsgebern (23 - 27) gespeicherten Kennlinien der Stellungswerte von Eingangs- und Ausgangsgrößen für die Eintrittsregelarmatur (8), die erste Bypassarmatur (11) und die zweite Bypassarmatur (12) werden über Umschalter (28, 29) den Positionsreglern (20.1) und (21.1) zugeführt. Der Positionsregler (20.1) regelt die Stellung der ersten Bypassarmatur (11), der Positionsregler (21.1) regelt die Stellung der zweiten Bypassarmatur (12).

Bei Betrieb mit Gasexpansionsturbine (7) (Expander) wirkt der Funktionsgeber (23) direkt auf die Stellarmaturen (19 - 19.2) der Eintrittsregelarmatur (8) und die Funktionsgeber (24) und (26) auf die Stellarmaturen (20 - 20.2) des ersten Bypasses (11) sowie auf die Stellarmaturen (21 - 21.2) des zweiten Bypasses (12).

Bei Regelung 2 (Betrieb ohne Gasexpansionsturbine) wirken die Funktionsgeber (25) und (27) auf die Stellarmaturen (20 - 20.2) des ersten Bypasses (11) sowie auf die Stellarmaturen (21 - 21.2) des zweiten Bypasses (12). Die Stellantriebe (19 - 19.2) der Eintrittsarmatur (8) werden nicht angesprochen, die Eintrittsregelarmaturen (8) und (9) bleiben geschlossen, wobei die Stellantriebe (22 - 22.2) der Schnellschlußarmatur (9) über den Drehzahlregler (10) der Gasentspannungsturbine (7) angesprochen werden.

Zwischen dem Prozeßregler (17) und den Funktionsgebern (23 - 27) ist ein Umschaltregler (30) zwischengeschaltet, der bei Laständerungen oder anderen Unregelmäßigkeiten während der Regelung des Druckes die Signale des Druckreglers (18) auf die Funktionsgeber (23 - 27) überträgt.

Vor dem Prozeßregler (17) und dem Druckregler (32) des Doppelschieberventiles (13) ist jeweils ein Meßumformer (33) vorgesehen, die den (Differenz-)druck ΔP in ein elektrisches Signal umformen.

### Bezugsziffernliste:

- 1: Reaktor
- 2: Regenerator
- 3: Rauchgasleitung A
- 4: Rauchgasleitung B
- 5: Bypassleitung C
- 6: Bypassleitung D
- 7: Gasexpansionsturbine/Expander
- 7.1: Generator
- 8: Eintrittsregelarmatur
- 9: Schnellschlußarmatur
- 10: Drehzahlregler
- 11: Erste Bypassarmatur
- 12: Zweite Bypassarmatur
- 13: Doppelschieberventil
- 14: Drosselkammer in A
- 15: Abhitzekessel
- 16: Drosselkammer in C
- 17: Differenzdruckregler/Prozeßregler
- 18: Druckregler im Eintritt von 7
- 19: Positionsgeber von 8
- 19.1: Positionsregler
- 19.2: Stellantrieb
- 20: Positionsgeber von 11
- 20.1: Positionsregler
- 20.2: Stellantrieb
- 21: Positionsgeber von 12
- 21.1: Positionsregler
- 21.2: Stellantrieb
- 22: Positionsgeber von 9
- 22.1: Positionsregler
- 22.2: Stellantrieb
- 23: Funktionsgeber Eintrittsregelarmatur (8)
- 24: Funktionsgeber erster Bypassarmatur für Betrieb mit Gasexpansionsturbine
- 25: Funktionsgeber erste Bypassarmatur für Betrieb ohne Gasexpansionsturbine
- 26: Funktionsgeber zweite Bypassarmatur für Betrieb mit Gasexpansionsturbine
- 27: Funktionsgeber für Betrieb ohne Gasexpansionsturbine
- 28: Umschaltrelais erste Bypassarmatur
- 29: Umschaltrelais zweite Bypassarmatur
- 30: Umschaltregler
- 31: Staubabscheider
- 32: Druckregler von 13
- 33: Meßumformer

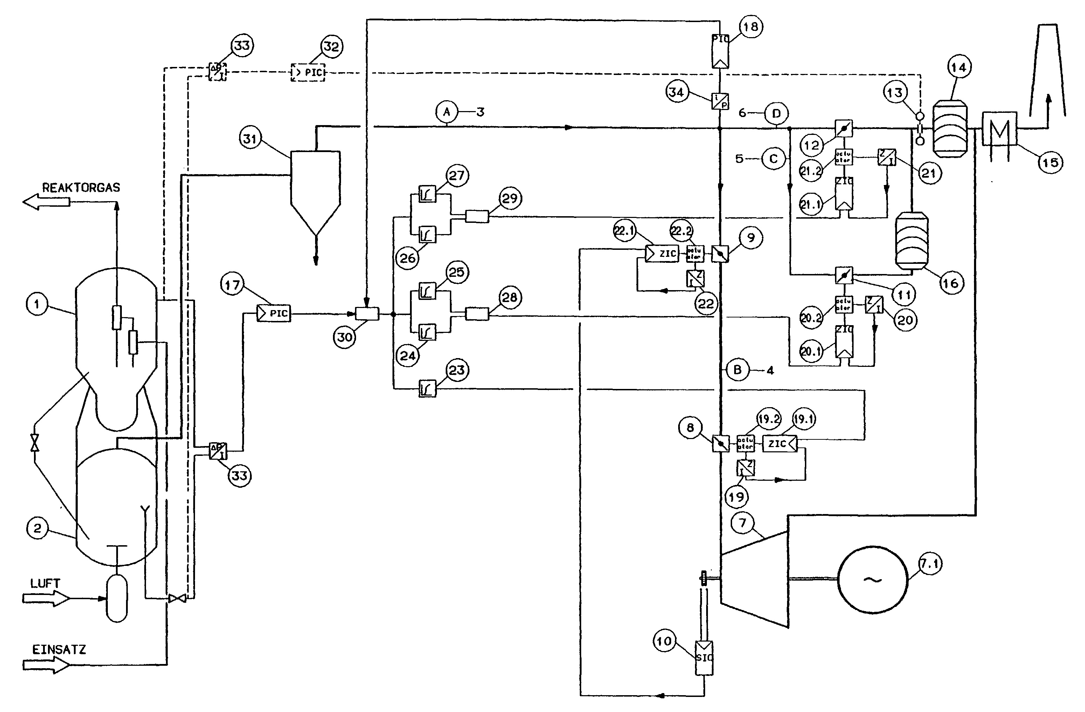

## Patentansprüche

1. Verfahren zum Regeln von Gasdrücken eines im Verbund mit einem Reaktor (1) arbeitenden Regenerators (2) bei Einsatz von mindestens einer Gasentspannungsturbine (7), wobei an den Regenerator (2) eine Rauchgasleitung (3) angeschlossen, die sich in eine zu der Gasentspannungsturbine (7) führenden Gasleitung (4), in einen ersten Bypass (5) mit einer ersten Bypassarmatur (11) und einen zweiten Bypass (6) mit einer zweiten Bypassarmatur (12) verzweigt, wobei in der Gasleitung (4) vor Eintritt in die Gasentspannungsturbine (7) eine Schnellschlußarmatur (9) und eine Regelarmatur (8) hintereinander angeordnet sind und wobei ein Prozeßregler (17) zur Betätigung der Schnellschlußarmatur (9), der Regelarmatur (8) und der Bypassarmaturen (11, 12) vorgesehen ist, **dadurch gekennzeichnet,**
- **daß** die Kennlinien mit den Stellgrößen der Schnellschlußarmatur (9), der Regelarmatur (8) und der Bypassarmaturen (11, 12) als Funktion des Gasdurchflusses aufgenommen und in den Prozeßregler (17) einprogrammiert werden, und zwar einmal als Regelung 1 mit Betrieb der Gasexpansionsturbine (7) und einmal als Regelung 2 ohne Betrieb der Gasexpansionsturbine (7),
- **daß** dem Prozeßregler (17) ein Funktionsgeber (23) für die Regelarmatur (8) und je zwei jeweils über einen Umschalter (28, 29) geschaltete Funktionsgeber (24, 25, 26, 27) für die Bypassarmaturen (11, 12) nachgeschaltet sind,
- **daß** in den Funktionsgebern (23, 24, 25, 26, 27) die Kennlinien linealisiert werden,
**daß** in dem Funktionsgeber (23) für die Regelarmatur (8) und in je einem Funktionsgeber (24, 26) der Bypassarmaturen (11, 12) ein ersten Funktionsablauf bei Betrieb der Gasentspannungsturbine (7) gemäß Regelung 1 und in den jeweils anderen Funktionsgebern (25, 27) der Bypassarmaturen (11, 12) ein zweiter Funktionsablauf ohne Betrieb der Gasentspannungsturbine (7) gemäß Regelung 2 gespeichert wird,
- **daß** die Ausgangsgrößen dieser Funktionsgeber (23, 24, 25, 26 27) die Sollwerte für Positionsgeber (19, 20, 21) der jeweiligen Armaturen (8, 11, 12) bilden
- und **daß** bei einer plötzlichen Laständerung bzw. Abschaltung der Gasexpansionsturbine (7) über die Umschalter (28, 29) von Regelung 1 auf Regelung 2 umgeschaltet wird.

2. Verfahren nach Anspruch 1, **dadurch gekennzeichnet, daß** beim Zurückschalten vom Betrieb ohne Gasexpansionsmaschine (7) (Regelung 2) auf Betrieb mit Gasexpansionsturbine (7) (Regelung 1) bei geschlossenen Eintrittsarmaturen (8, 9) der Ausgang des Reglers (17) einen solchen Stellgrößensprung ausführt, daß die Stellung der Bypassarmaturen (11, 12) unverändert bleibt.

3. Verfahren nach Anspruch 1 und 2, **dadurch gekennzeichnet, daß** bei einer Umschaltung vom Betrieb mit Gasexpansionstubine (7) (Regelung 1) auf Betrieb ohne Gasexpansionsturbine 7) (Regelung 2) bei teilweise geschlossener Eintrittsarmatur (8) oder (9) vom Eingang der Funktionsgeber (25) und (27) eine Korrekturgröße substrahiert wird, welche eine Funktion der Stellung der angedrosselten Eintrittsarmatur (8) oder der Stellgröße der angedrosselten Eintrittsarmatur (9) ist.

4. Verfahren nach den Ansprüchen 1 bis 3, **dadurch gekennzeichnet, daß** dem Prozeßregler (17) nach einer Laständerung der Gasexpansionsturbine (7) vorübergehend eine Korrekturgröße aufgeschaltet wird, die aus der Differenz der Massenströme zwischen Eintritt der ersten Bypassleitung (5) und Austritt der ersten Bypassleitung (5) gebildet wird.

5. Verfahren nach den Ansprüchen 1 bis 4, **dadurch gekennzeichnet, daß** unmittelbar mit der Laständerung der Gasexpansionsturbine (7) nicht mehr der Prozeßdruck, sondern der Druck unmittelbar vor den Bypassarmaturen (11, 12) der Gasexpansionsturbine (7) oder unmittelbar vor der Eintrittsarmatur (9) durch den Druckregler (18) geregelt wird.

6. Verfahren nach Anspruch 5, **dadurch gekennzeichnet, daß** zwei getrennte Regler (17, 18) für die Regelung des Prozeßdruckes und des Druckes unmittelbar vor den Bypassarmaturen (11, 12) der Gasexpansionsturbine (7) verwendet werden, und daß der jeweils nicht im Eingriff befindliche Regler (17) oder (18) auf den Ausgang des aktiven Reglers (17) oder (18) nachgeführt wird.

7. Verfahren nach Anspruch 5, **dadurch gekennzeichnet, daß** nur ein gemeinsamer Regler (17) für die Regelung des Prozeßdruckes und des Druckes unmittelbar vor den Bypassarmaturen (11, 12) verwendet wird und daß dieser Regler (17) mit einer umschaltbaren Regeldifferenz beaufschlagt wird.

8. Verfahren nach den Ansprüchen 5 bis 7, **dadurch gekennzeichnet, daß** das Rückschalten der Regelung des Druckes vor den Bypassarmaturen (11, 12) oder vor der Eintrittsarmatur (8) der Gasentspannungsturbine (7) auf den Prozeßregler (17) zeitabhängig derart erfolgt, daß nach einer voreingestellten Zeit ab Laständerung der Gasexpansionsturbine (7) wieder auf Prozeßdruckregelung umgeschaltet wird.

9. Verfahren nach den Ansprüchen 5 bis 8, **dadurch gekennzeichnet, daß** das Rückschalten der Regelung des Druckes vor den Bypassarmaturen (11, 12) oder vor der Eintrittsarmatur (8) der Gasentspannungsturbine (7) auf den Prozeßregler (17) abhängig von einer voreingestellten Zeit erfolgt und zusätzlich davon, daß die aktuelle Stellgröße der im Eingriff befindlichen ersten Bypassarmatur (11) oder zweiten Bypassarmatur (12) den Mittelwert der Stellgröße über einem vordefinierten zurückliegenden Zeitraum entspricht.

10. Verfahren nach den Ansprüchen 5 bis 9, **dadurch gekennzeichnet, daß** das Rückschalten der Regelung des Druckes vor den Bypassarmaturen (11, 12) oder vor der Eintrittsarmatur (8) der Gasentspannungsturbine (7) auf den Prozeßregler (17) in dem Punkt erfolgt, in dem die Stellgröße zu der im Eingriff befindlichen ersten Bypassarmatur (11) oder zweiten Bypassarmatur (12) der größten Änderung unterworfen ist.

11. Verfahren nach den Ansprüchen 5 bis 10, **dadurch gekennzeichnet, daß** die Messung des Druckes vor den Bypassarmaturen (11, 12) durch den Druckregler (18) entweder im Knotenpunkt der Rauchgasleitung (3) und der Gasleitung (4) oder in der Gasleitung (4) zur Gasexpansionsturbine (7) oder in dem ersten Bypass (5) zu den Bypassarmaturen erfolgt.

12. Verfahren nach den Ansprüchen 1 bis 10, **dadurch gekennzeichnet, daß** nach einer Laständerung der Gasexpansionsturbine (7) die Proportionalverstärkung des aktiven Prozeßreglers (17) oder d es aktiven Druckreglers (18) erhöht wird.

13. Verfahren zum Regeln von Gasdrücken nach den Ansprüchen 1 bis 12, **dadurch gekennzeichnet, daß** der Stellgröße des Prozeßreglers (17) und des Druckreglers (18) im Augenblick der Laständerung eine Störgröße bzw. Störgrößensprung aufaddiert wird, die an die Funktionsgeber (23 - 27) der Eintrittsarmatur (8) und der Bypassarmaturen (11, 12) übertragen wird.

14. Verfahren zum Regeln von Gasdrücken nach Anspruch 13, **dadurch gekennzeichnet, daß** die Höhe des Störgrößensprunges bei einer plötzlichen Laständerung oder einem Lastabwurf der Gasturbine (7), der an die Positionsgeber (19, 20, 21, 22) übertragen wird, während der Inbetriebnahme der Gasturbine (7), der Regelarmatur (8), der Schnellschlußarmatur (9) und der Bypassarmaturen (11, 12) ermittelt wird.

## Claims

1. Method of regulating gas pressures of a regenerator (2), which operates in compound with a reactor (1), with use of at least one gas expansion turbine (7), wherein connected with the regenerator (2) is a flue gas duct (3) which branches into a gas duct (4) leading to the gas expansion turbine (7), a first bypass (5) with a first bypass valve (11) and a second bypass (6) with a second bypass valve (12), wherein a quick-acting gate valve (9) and a regulating valve (8) are arranged one after the other in the gas duct (4) before entry into the gas expansion turbine (7) and wherein a process regulator (17) for actuation of the quick-acting gate valve (9), the regulating valve (8) and the bypass valves (11, 12) is provided, **characterised in that**
- the characteristic curves with the setting magnitudes of the quick-acting gate valve (9), the regulating valve (8) and the bypass valves (11, 12) are recorded as a function of the gas throughflow and programmed into the process regulator (17) and, in particular, once as Regulation 1 with operation of the gas expansion turbine (7) and once as Regulation 2 without operation of the gas expansion turbine (7),
- a function transmitter (23) for the regulating valve (8) and two respective function transmitters (24, 25, 26, 27), which are connected by way of a respective changeover switch (28, 29), for the bypass valves (11, 12) are connected downstream of the process regulator (17),
- the characteristic curves are linearised in the function transmitters (23, 24, 25, 26, 27),
- a first function sequence with operation of the gas expansion turbine (7) in accordance with Regulation 1 is stored in the function transmitter (23) for the regulating valve (8) and in a respective function transmitter (24, 26) of the bypass valves (11, 12) and a second function sequence without operation of the gas expansion turbine (7) in accordance with Regulation 2 is stored in the respective other function transmitters (25, 27) of the bypass valves (11, 12),
- the output magnitudes of these function transmitters (23, 24, 25, 26, 27) form the target values for position transmitters (19, 20, 21) of the respective valves (8, 11, 12) and
- in the case of a sudden change in load or switching off of the gas expansion turbine (7), there is switching over by way of the changeover switches (28, 29) from Regulation 1 to Regulation 2.

2. Method according to claim 1, **characterised in that** in the case of switching back from operation without gas expansion engine (7) (Regulation 2) to operation with gas expansion turbine (7) (Regulation 1) with closed inlet valves (8, 9) the output of the regulator (17) executes such a jump in setting magnitude that the setting of the bypass valves (11, 12) remains unchanged.

3. Method according to claim 1 and 2, **characterised in that** in the case of a switching over from operation with gas expansion turbine (7) (Regulation 1) to operation without gas expansion turbine (7) (Regulation 2) with partly closed inlet valve (8 or 9) there is subtracted from the input of the function transmitters (25 and 27) a correction magnitude which is a function of the setting of the throttled inlet valve (8) or of the setting magnitude of the throttled inlet valve (9).

4. Method according to claims 1 to 3, **characterised in that** there is temporarily applied to the process regulator (17) after a change in load of the gas expansion turbine (7) a correction magnitude which is formed from the difference of the mass flows between inlet of the first bypass duct (5) and outlet of the first bypass duct (5).

5. Method according to claims 1 to 4, **characterised in that** directly with the load change of the gas expansion turbine (7) there is regulation by the pressure regulator (18) no longer of the process pressure, but of the pressure directly in front of the bypass valves (11, 12) of the gas expansion turbine (7) or directly in front of the inlet valve (9).

6. Method according to claim 5, **characterised in that** two separate regulators (17, 18) are used for regulation of the process pressure and the pressure directly in front of the bypass valves (11, 12) of the gas expansion turbine (7) and that the respective regulator (17 or 18) not disposed in action is reset to the output of the active regulator (17 or 18).

7. Method according to claim 5, **characterised in that** only a common regulator (17) is used for the regulation of the process pressure and the pressure directly in front of the bypass valves (11, 12) and that this regulator (17) is acted on by a regulating difference which can be changed over.

8. Method according to claims 5 to 7, **characterised in that** the switching of the regulation of the pressure in front of the bypass valves (11, 12) or in front of the inlet valve (8) of the gas expansion turbine (7) back to the process regulator (17) is carried out in dependence on time in such a manner that after a preset time from change in load of the gas expansion turbine (7) there is switching back over to process pressure regulation.

9. Method according to claims 5 to 8, **characterised in that** the switching of the regulation of the pressure in front of the bypass valves (11, 12) or in front of the inlet valve (8) of the gas expansion turbine (7) back to the process regulator (17) is carried out in dependence on a preset time and additionally on whether the actual setting magnitude of the first bypass valve (11) or second bypass valve (12) disposed in action corresponds with the mean value of the setting magnitude over a predefined retrospective time period.

10. Method according to claims 5 to 9, **characterised in that** the switching of the regulation of the pressure in front of the bypass valves (11, 12) or in front of the inlet valve (8) of the gas expansion turbine (7) back to the process regulator (17) is carried out at the point at which the setting magnitude for the first bypass valve (11) or second bypass valve (12) disposed in action is subject to the greatest change.

11. Method according to claims 5 to 10, **characterised in that** the measurement of the pressure in front of the bypass valves (11, 12) by the pressure regulator (18) is carried out at the junction point of the flue gas duct (3) and the gas duct (4) or in the gas duct (4) to the gas expansion turbine (7) or in the first bypass (5) to the bypass valves.

12. Method according to claims 1 to 10, **characterised in that** after a load change of the gas expansion turbine (7) the proportional amplification of the active process regulator (17) or of the active pressure regulator (18) is increased.

13. Method for regulating gas pressures according to claims 1 to 12, **characterised in that** a disturbance magnitude or disturbance magnitude jump is added to the setting magnitude of the process regulator (17) and of the pressure regulator (18) at the moment of the load change and is communicated to the function transmitters (23 to 27) of the inlet valve (8) and the bypass valves (11, 12).

14. Method for regulating gas pressures according to claim 13, **characterised in that** the level of the disturbance magnitude jump in the case of a sudden load change or a load shedding of the gas turbine (7), which is communicated to the position transmitters (19, 20, 21, 22), is ascertained during the putting into operation of the gas turbine (7), the regulating valve (8), the quick-acting gate valve (9) and the bypass valves (11,12).

## Revendications

1. Procédé pour la régulation de pressions de gaz d'un régénérateur (2) travaillant en liaison avec un réacteur (1), avec utilisation d'au moins une turbine de détente de gaz (7), dans lequel est raccordée au régénérateur (2) une conduite de gaz de fumée (3) qui se ramifie en une conduite de gaz (4) menant à la turbine de détente de gaz (7), en un premier bipasse (5) comportant un premier organe de robinetterie de bipasse (11) et un second bipasse (6) comportant un second organe de robinetterie de bipasse (12), dans lequel sont disposés l'un derrière l'autre dans la conduite de gaz (4), en amont de l'entrée dans la turbine de détente de gaz (7), un organe de robinetterie à fermeture rapide (9) et un organe de robinetterie de régulation (8), et dans lequel un régulateur de processus (17) est prévu pour actionner l'organe de robinetterie à fermeture rapide (9), l'organe de robinetterie de régulation (8) et les organes de robinetterie de bipasse (11, 12), **caractérisé en ce**
- **que** les courbes caractéristiques comportant les grandeurs de réglage de l'organe de robinetterie à fermeture rapide (9), de l'organe de robinetterie de régulation (8) et des organes de robinetterie de bipasse (11, 12), sont enregistrées en fonction du débit gazeux et programmées dans le régulateur de processus (17), et ce une fois en tant que régulation 1 avec la turbine de détente de gaz (7) en service, et une fois en tant que régulation 2 avec la turbine de détente de gaz (7) hors service,
- **que** sont montés en aval du régulateur de processus (17), un transmetteur de fonction (23) pour l'organe de robinetterie de régulation (8) et respectivement deux transmetteurs de fonction (24, 25, 26, 27) pour chacun des organes de robinetterie de bipasse (11, 12) connectés chacun par l'intermédiaire d'un commutateur (28, 29),
- **que** les courbes caractéristiques sont linéarisées dans les transmetteurs de fonction (23, 24, 25, 26, 27),
- **que** sont mémorisés dans le transmetteur de fonction (23) pour l'organe de robinetterie de régulation (8) et dans un transmetteur de fonction (24, 26) de chaque organe de robinetterie de bipasse (11, 12) un premier scénario de fonctionnement avec la turbine de détente de gaz (7) en service conformément à la régulation 1, et dans les autres transmetteurs de fonction (25, 27) des organes de robinetterie de bipasse (11, 12) un second scénario de fonctionnement avec la turbine de détente de gaz (7) hors service conformément à la régulation 2,
- **que** les grandeurs de sortie de ces transmetteurs de fonction (23, 24, 25, 26, 27) constituent les valeurs de consigne pour des transmetteurs de position (19, 20, 21) des organes de robinetterie (8, 11, 12) respectifs
- et **que**, dans le cas d'une variation de charge ou coupure soudaines de la turbine d'expansion des gaz (7), il s'opère une commutation de la régulation 1 à la régulation 2, par l'intermédiaire des commutateurs (28, 29).

2. Procédé selon la revendication 1, **caractérisé en ce que** dans le cas d'un retour du service sans machine d'expansion de gaz (7) (régulation 2) au service avec turbine d'expansion de gaz (7) (régulation 1), les organes de robinetterie d'entrée (8, 9) étant fermés, la sortie du régulateur (17) exécute un saut de grandeurs de réglage tel que la position des organes de robinetterie de bipasse (11, 12) demeure inchangée.

3. Procédé selon les revendications 1 et 2, **caractérisé en ce qu'**en cas de retour du service sans machine d'expansion de gaz (7) (régulation 2) au service avec la turbine d'expansion de gaz (7) (régulation 1), la robinetterie d'entrée (8) ou (9) étant partiellement fermée, est soustraite de l'entrée des transmetteurs de fonction (25) et (27) une grandeur de correction, laquelle est une fonction de la position de l'organe de robinetterie d'entrée (8) étranglé ou de la grandeur de réglage de l'organe de robinetterie d'entrée (9) étranglé.

4. Procédé selon l'une des revendications 1 à 3, **caractérisé en ce qu'**après une variation de charge de la turbine d'expansion de gaz (7), le régulateur de processus (17) reçoit provisoirement une grandeur de correction, qui est formée de la différence des débits massiques entre l'entrée de la première conduite de bipasse (5) et la sortie de la première conduite de bipasse (5).

5. Procédé selon les revendications 1 à 4, **caractérisé en ce que** directement lors de la variation de charge de la turbine d'expansion gazeuse (7), ce n'est plus la pression de processus qui est régulée par le régulateur de pression (18) mais la pression directement en amont des organes de robinetterie de bipasse (11, 12) de la turbine d'expansion de gaz (7) ou directement en amont de l'organe de robinetterie d'entrée (9).

6. Procédé selon la revendication 5, **caractérisé en ce que** sont utilisés deux régulateurs (17, 18) séparés pour la régulation de la pression de processus et de la pression directement en amont des organes de robinetterie de bipasse (11, 12) de la turbine d'expansion de gaz (7), et que le régulateur (17) ou (18) qui est inactif à chaque moment est asservi à la sortie du régulateur (27) ou (18) actif.

7. Procédé selon la revendication 5, **caractérisé en ce qu'**est utilisé un régulateur commun (17) pour la régulation de la pression de processus et de la pression directement en amont des organes de robinetterie de bipasse (11, 12) et que ce régulateur (17) est attaqué par une différence de régulation commutable.

8. Procédé selon les revendications 5 à 7, **caractérisé en ce que** la commutation de retour de la régulation de la pression en amont des organes de robinetterie de bipasse (11, 12) ou en amont de l'organe de robinetterie d'entrée (8) de la turbine d'expansion de gaz (7) sur le régulateur (17) s'opère en fonction du temps de manière telle que passé un laps de temps prédéfini à partir de la variation de charge de la turbine d'expansion de gaz (7) il s'opère une commutation de retour à la régulation de pression.

9. Procédé selon les revendications 5 à 8, **caractérisé en ce que** la commutation de retour de la régulation de la pression en amont des organes de robinetterie de bipasse (11, 12) ou en amont de l'organe de robinetterie d'entrée (8) de la turbine de détente de gaz (7) sur le régulateur de processus (17) s'opère en fonction d'un temps prédéfini et en fonction de ce que la grandeur de réglage actuelle du premier organe de robinetterie de bipasse (11) ou du second organe de robinetterie de bipasse (12) actif correspond à la valeur moyenne de la grandeur de réglage sur une période prédéfinie écoulée.

10. Procédé selon les revendications 5 à 9, **caractérisé en ce que** la commutation de retour de la régulation de la pression en amont des organes de robinetterie de bipasse (11, 12) ou en amont de l'organe de robinetterie d'entrée (8) de la turbine de détente de gaz (7) sur le régulateur de processus (17) s'opère au moment où la grandeur de réglage par rapport au premier organe de robinetterie de bipasse (11) ou au second organe de robinetterie de bipasse (12) actif est soumise à la plus grande variation.

11. Procédé selon les revendications 5 à 10, **caractérisé en ce que** la mesure de la pression par le régulateur de pression (18) en amont des organes de robinetterie de bipasse (11, 12) s'opère soit au point de jonction de la conduite de gaz de fumée (3) et de la conduite de gaz (4), soit dans la conduite de gaz (4) vers la. turbine d'expansion de gaz (7), soit dans le premier bipasse (5) vers les organes de robinetterie de bipasse.

12. Procédé selon les revendications 1 à 10 **caractérisé en ce que**, après une variation de charge de la turbine d'expansion de gaz (7), l'amplification proportionnelle du régulateur de processus (7) actif ou du régulateur de pression (18) actif est augmentée.

13. Procédé selon les revendications 1 à 12, **caractérisé en ce qu'**à la grandeur de réglage du régulateur de processus (17) et du régulateur de pression (18) est ajoutée au moment de la variation de charge une grandeur parasite ou un saut de grandeur parasite, qui est transféré aux transmetteurs de fonction (23 - 27) de l'organe de robinetterie d'entrée (8) et des organes de robinetterie de bipasse (11, 12).

14. Procédé selon la revendication 13, **caractérisé en ce que** la hauteur du saut de grandeur parasite lors d'une variation de charge soudaine ou d'un délestage de la turbine de gaz (7) qui est transmis aux transmetteurs de position (19, 20, 21, 22), est déterminée pendant la mise en service de la turbine de gaz (7), de l'organe de robinetterie de régulation (8), de l'organe de robinetterie à fermeture rapide (9) et des organes de robinetterie de bipasse (11, 12).
